# FASCICULE DE BREVET EUROPEEN

(11) **EP 1 094 294 B1**
(45) Date de publication et mention de la délivrance du brevet: **04.12.2002**
(21) Numéro de dépôt: 99810966.4
(22) Date de dépôt: 22.10.1999
(51) Int. Cl.: G01B 3/22, G01B 5/00

(54) **Dispositif de mesure de déplacement linéaire ou angulaire**
Vorrichtung zur Messung der Linear- oder Winkelverschiebung
Linear or angular displacement measuring device

(43) Date de publication de la demande: 25.04.2001
(73) Titulaire: Brown & Sharpe Tesa S.A., 1020 Renens (CH)
(72) Inventeur: Borgognon, Lucien M., 1110 Morges (CH); Cardillo, Marco M., 1007 Lausanne (CH); Duteil, Roland M., 1203 Genève (CH)
(74) Mandataire: Saam, Christophe

(56) Documents cités:
- CH-A- 352 497
- DE-A- 3 211 118
- DE-A- 3 403 903
- DE-A- 19 738 316
- US-A- 4 433 290
- US-A- 5 189 796

## Description

La présente invention concerne un dispositif de mesure, notamment un comparateur pour la mesure et la comparaison de longueurs ou d'angles.

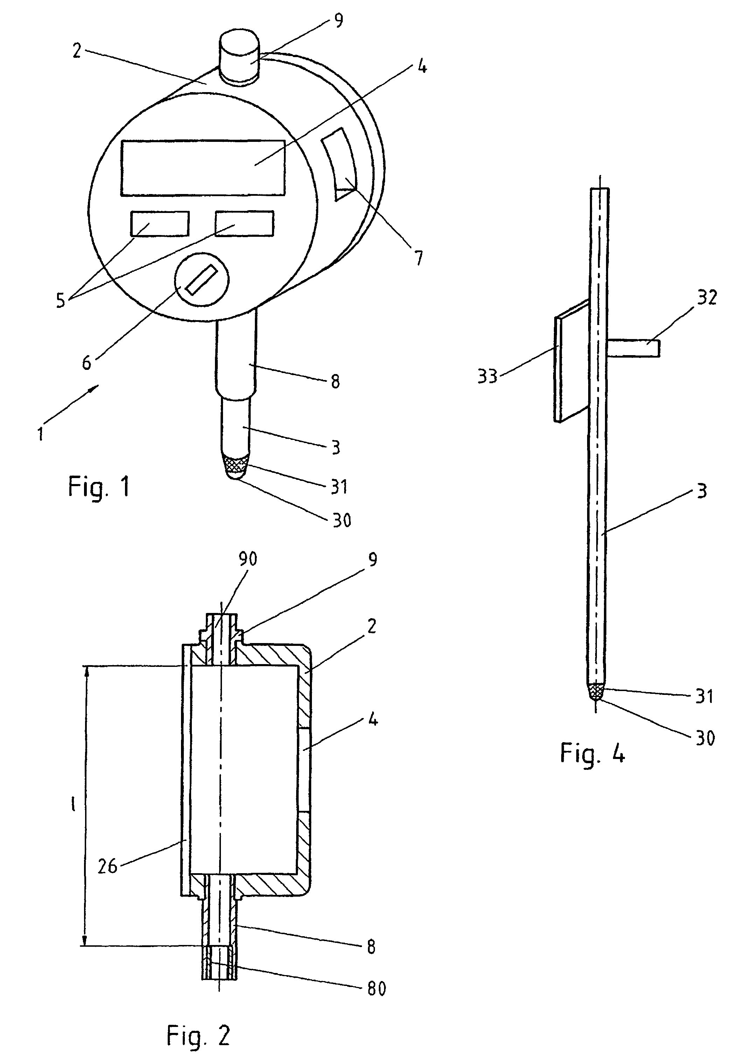

Un exemple de comparateur est représenté sur les figures 1 et 2. Ce comparateur 1 comprend un bâti 2, ici de forme cylindrique, et une touche de palpage 3 dont la pointe 30 est destinée à venir en contact avec l'objet à mesurer ou à vérifier. Un système de mesure mécanique, optoélectronique et/ou électronique permet de déterminer la position longitudinale de la touche de mesure et de l'afficher, par exemple sur un cadran à aiguille ou sur affichage LCD 4. Le comparateur est généralement muni d'une ou plusieurs douilles 8, 9 de dimensions normalisées permettant de le fixer à une machine ou un dispositif externe. Les comparateurs à affichage électronique comme celui représenté sont en outre munis d'un compartiment à pile 6, de boutons de manipulation 5, ainsi qu'éventuellement d'une interface sérielle 7, par exemple une interface optoélectronique.

Dans le comparateur représenté sur les figures 1 et 2, des paliers 80, 90 sont prévus pour permettre un coulissement et un guidage précis de la touche 3. Dans cet exemple, le palier 90 est usiné directement dans la douille supérieure 9 tandis que le palier inférieur 80 est rapporté dans la douille inférieure 8.

Le comparateur représenté est muni d'un boîtier métallique dont les faces externes ont fait l'objet d'un traitement de surface pour des raisons esthétiques notamment. L'étanchéité n'est que partiellement assurée grâce à un bâti 2 massif et à un fond 26 vissé ou fixé à cran sur ce bâti et protégeant le mécanisme interne du comparateur des projections de liquide. Le dispositif illustré sur les figures 1 et 2 doit donc être maintenu propre pour fonctionner et est donc mal adapté à un fonctionnement dans un environnement humide ou sujet aux projections de poussières, de lubrifiant ou d'huile de coupe par exemple. En particulier, il est important
de veiller à ce que le système de mesure à l'intérieur du comparateur soit exempt de toute humidité.

CH352497 décrit un exemple de comparateur de ce type, incluant des paliers directement rapportés dans le bâti.

US5189796 décrit un autre exemple de comparateur dans lequel les paliers sont directement usinés dans le bâti.

Un but de la présente invention est de proposer un comparateur amélioré par rapport aux comparateurs de l'art antérieur. Un but de la présente invention est aussi de proposer un comparateur plus économique, plus précis, plus étanche, plus durable et/ou comportant moins de pièces que le comparateur illustré sur les figures 1 et 2.

Selon l'invention, ces buts sont atteints notamment en rapprochant les paliers de passage de la touche l'un de l'autre. L'invention suggère donc d'utiliser un écartement I entre les paliers inférieur au diamètre du boîtier. Cette caractéristique permet de réduire la flexion de la tige de touche et donc d'augmenter la précision.

Selon une autre caractéristique de l'invention, ces buts sont aussi atteints en utilisant des paliers usinés directement dans le bâti du comparateur. Cette caractéristique permet de réduire le nombre de pièces, et donc le coût, et de diminuer la somme des tolérances de fabrication et d'assemblage des différentes pièces, ce qui permet également d'améliorer la précision. Cette caractéristique permet également de réduire la distance I entre les paliers.

Selon une autre caractéristique de l'invention, ces buts sont également atteints en utilisant un boîtier recouvrant les faces externes du bâti métallique du comparateur. Le boîtier permet de résoudre les problèmes d'étanchéité. D'autre part, le boîtier permet d'augmenter le diamètre externe du comparateur, et donc d'utiliser un affichage 4 de plus grande taille et plus lisible, sans devoir augmenter la distance I entre les paliers qui est déterminée par le diamètre du bâti métallique. Le boîtier est de préférence en matériau synthétique et peut être maintenu par les douilles du comparateur, permettant un montage simple. En le disposant de manière à recouvrir complètement le bâti métallique, il est en outre possible d'économiser le traitement de surface onéreux du bâti, ce qui permet de réduire les coûts sans devoir renoncer à un design attractif.

L'invention sera mieux comprise à l'aide de la description d'un exemple de réalisation illustré par les figures annexées qui montrent:
La figure 1 qui a déjà été décrite, une vue en perspective d'un comparateur ne présentant pas les avantages de l'invention.
La figure 2 qui a déjà été décrite, une vue en coupe d'un comparateur ne présentant pas les avantages de l'invention.
La figure 3, une vue en coupe d'un comparateur selon l'invention.
La figure 4, une vue en perspective d'une touche adaptée à un comparateur selon l'invention.

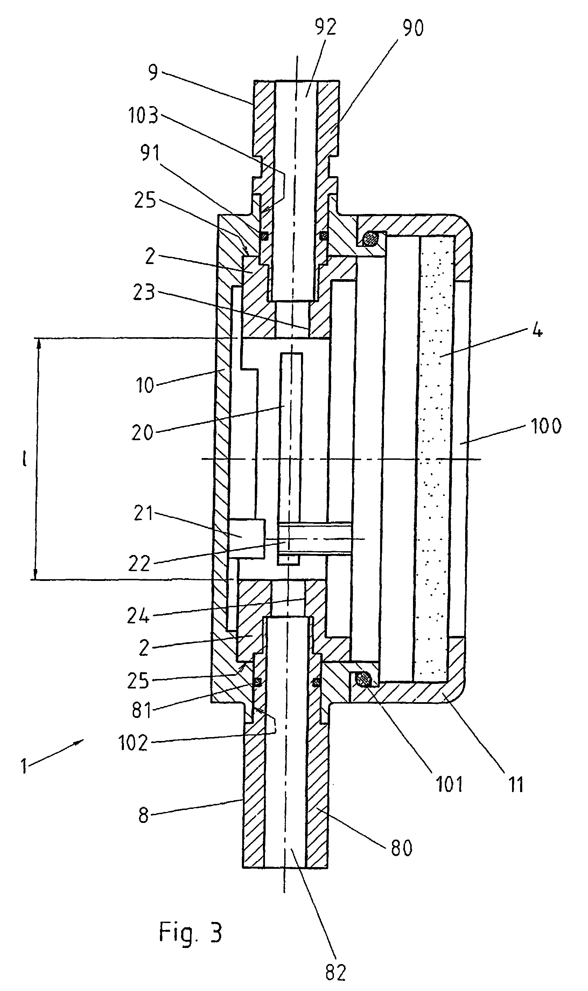

La figure 3 Illustre une vue en coupe d'un comparateur selon l'invention. Pour la lisibilité de la figure, certains éléments du comparateur, tels que la touche (illustrée sur la figure 4) ou le système de mesure n'ont pas été représentés. L'invention s'applique en fait à tout type de système de mesure pour comparateur, par exemple à des systèmes purement mécaniques à affichage par aiguille, ou à des systèmes électroniques, par exemple capacitifs, inductifs, optoélectroniques ou magnétorésistifs, permettant d'afficher les résultats par exemple sur un affichage à cristaux liquides 4 ou de les exporter via une interface sérielle, par exemple une interface optoélectronique RS232 (7).

Le comparateur 1 permet de déterminer la position de l'extrémité 30 de la touche de palpage 3 et de comparer cette position avec des positions de référence mémorisées. Il comprend un bâti métallique 2 de forme généralement cylindrique muni dans cet exemple d'un palier supérieur 23 et d'un palier inférieur 24 permettant de faire coulisser longitudinalement la touche 3. Les paliers sont directement usinés dans le bâti 2, afin de réduire le nombre de pièces et la somme des tolérances de fabrication et d'assemblage, et donc d'augmenter la précision tout en réduisant le coût et l'encombrement. Cette disposition permet en outre de réduire la distance 1 entre les paliers 23 et 24, notamment de la rendre bien inférieure au diamètre externe du boîtier du comparateur, et ainsi de diminuer la flexion de la touche 3 dans la zone de mesure entre les paliers, ce qui permet d'améliorer la précision.

Selon la variante, on pourra utiliser différents types de paliers 23, 24, notamment des paliers empierrés et/ou munis d'un huilier assurant un coulissement optimal. L'invention s'applique également à des comparateurs dans lesquels la touche ne traverse le bâti qu'en un seul point, et donc munis d'un seul palier. L'invention concerne également les variantes de comparateur moins avantageuses qui sont munies de deux paliers, mais dont un seul est usiné directement dans le bâti 2.

Une douille inférieure 8 est liée solidairement au bâti 2, par exemple par vissage, collage ou chassage. Cette douille est optionnelle et pourrait être absente selon la variante réalisée. Dans une variante non illustrée, la douille supérieure 9 pourrait aussi être réalisée en matériau synthétique, par exemple intégré au boîtier 10 ou au couvercle 11 décrits plus bas. La douille inférieure 8 est munie d'une ouverture traversante 82 pour le passage de la touche 3, le diamètre de l'ouverture 82 étant légèrement supérieur au diamètre interne du palier inférieur 24. La douille inférieure 8 ne participe ainsi pas au guidage de la touche 3, en sorte que ses contraintes d'usinage et de fixation au bâti 2 sont moins critiques. La douille 8 permet de fixer le comparateur à des dispositifs externes, par exemple à des machines ou le long d'une chaîne de montage.

De la même façon, dans l'exemple illustré, une douille supérieure 9 est liée solidairement au bâti 2, par exemple par vissage, collage ou chassage. Cette douille est optionnelle et pourrait être absente selon la variante réalisée. Dans une variante non illustrée, la douille supérieure 9 pourrait aussi être réalisée en matériau synthétique, par exemple intégré au boîtier 10 ou au couvercle 11 décrits plus bas. De la même façon que pour la douille inférieure 8, la douille supérieure 9 est munie d'une ouverture traversante 92 de diamètre légèrement supérieur au diamètre interne du palier 23, et ne participant ainsi pas au guidage de la touche.

La touche 3 est représentée en perspective sur la figure 4. Elle comporte essentiellement un corps cylindrique dont le diamètre est usiné avec précision, afin d'éviter tout jeu latéral dans les paliers 23 et 24. L'extrémité de la touche est munie d'une pointe de touche 30 dont la forme et la dureté peuvent être adaptés à l'utilisation, la pointe de touche 30 pouvant dans une variante préférentielle être dévissée en la saisissant par une portion 31 pour la remplacer par une pointe plus appropriée.

Dans la variante illustrée, une portion mobile 33 d'un circuit électronique de détermination de position est fixée solidairement à la touche 3, de manière à collaborer avec une partie fixe non représentée et liée au bâti 2 du circuit de mesure. La position relative de la partie mobile 33 et de la partie fixe peut être déterminée et comparée avec une valeur de référence mémorisée, et le résultat affiché sur des moyens d'affichage numériques 4. Le système de mesure peut être de type capacitif, inductif, magnétorésistif ou optoélectronique par exemple, l'invention n'étant pas limitée à ces exemples et pouvant également être appliquée à des comparateurs entièrement mécaniques. Dans le cas d'un système capacitif ou magnétorésistif, la partie fixe sera par exemple constituée par un capteur plan monté à faible distance en regard de la règle coulissante 33 munie d'électrodes capacitives respectivement magnétiques. Dans le cas d'un système électro-optique, le système de mesure comprendra par exemple un émetteur lumineux envoyant à travers une ou plusieurs lentilles un faisceau lumineux à travers la règle graduée 33 ainsi qu'un capteur optique réagissant à la lumière transmise ou réfléchie par la règle.

La touche 3 est munie d'une portion de guidage 32 collaborant avec une fente de guidage 20 usinée ou rapportée dans la paroi interne du bâti, afin d'empêcher la rotation de la touche sur son propre axe. Une butée 21, dans laquelle peut être vissée une vis 22 vissée par la face avant du comparateur, permet de limiter le déplacement longitudinal de la touche 3 et d'éviter que la règle 33 ne puisse entrer en contact avec le bâti.

Le bâti 2 du comparateur est recouvert par un boîtier 10 en matériau synthétique ou éventuellement en tôle emboutie, qui recouvre de préférence toutes les faces externes 25 du bâti et ferme en outre le fond. Le boîtier 10 permet de protéger le comparateur des chocs et des infiltrations de liquide, et de lui donner un design attrayant. Afin de limiter le nombre de pièces et les points d'infiltration d'eau, on utilisera de préférence un boîtier réalisé en une seule pièce. Selon l'invention, le boîtier 10 est maintenu sur le bâti 2 par les douilles 8 et 9 insérées dans des ouvertures 102, 103 à travers le boîtier 10. Le comparateur est ainsi assemblé en plaçant le bâti métallique 2 au fond du boîtier 10, puis en passant la ou les douilles 8, 9 à travers les ouvertures 102, 103 afin de les assembler au bâti. Un joint circulaire 81 est de préférence prévu pour empêcher les infiltrations de liquide ou de vapeur entre la douille inférieure 8 et le boîtier 10; de la même façon, un joint circulaire 91 pourra être disposé entre la douille supérieure 9 et le boîtier 10. Des vis ou des éléments déformables élastiquement non représentés peuvent dans une variante être prévus en différents endroits du boîtier afin d'empêcher par exemple que le fond du boîtier 10 ne bouge.

Le comparateur est en outre muni d'un couvercle 11 monté sur le boîtier 10 et fermant la face avant. Le couvercle 11 sera lui-même de préférence réalisé en matériau synthétique et muni d'un affichage 4 visible à travers une glace 100 optionnelle et soudée ou collée de manière étanche dans une ouverture au travers du couvercle 11. Le couvercle 11 sera par exemple vissé, collé, soudé ou de préférence maintenu par déformation élastique sur le boîtier 10, un joint torique 101 pouvant être prévu pour empêcher toute infiltration de liquide ou de vapeur de liquide. Une butée non représentée est prévue pour empêcher la rotation du couvercle par rapport au boîtier. Dans une variante non représentée, le couvercle 11 est au contraire tournant par rapport au boîtier 10, afin de pouvoir rétablir l'horizontalité de l'affichage 4 même lorsque le comparateur n'est pas installé en position verticale. Dans ce cas, l'affichage 4 sera de préférence relié au système de mesure électronique non représenté par une natte de câbles flexibles non représentée. Le fonctionnement du comparateur ainsi que l'affichage 4 sont commandés par des touches de fonction non représentées sur le couvercle et/ou sur le boîtier 10, et qui permettent par exemple de sélectionner l'unité de mesure ou de mémoriser des positions de référence. On utilisera par exemple des touches de fonction en élastomère mou comprimées dans des ouvertures correspondantes à travers le boîtier 10 et/ou le couvercle 11, de façon à garantir l'étanchéité.

Dans une variante non représentée, la jonction entre le boîtier et le couvercle est oblique, en sorte que le boîtier est maintenu par la douille inférieure et le couvercle par la douille supérieure (ou vice-versa).

Le comparateur comprend en outre de préférence une sortie sérielle non représentée, par exemple une fiche de connexion permettant d'insérer une prise optoélectronique. Un compartiment pour pile, par exemple pour une pile au lithium, sera en outre prévu par exemple dans les parois latérales du comparateur, de manière à permettre un remplacement de la pile en ouvrant le compartiment, sans qu'il soit nécessaire de démonter le boîtier plastique 10 ni même de retirer le couvercle 11. Des joints appropriés seront prévus au niveau du compartiment à pile et éventuellement de l'interface opto-électronique.

Le comparateur pourra être livré avec un capuchon non représenté et destiné à être inséré par-dessus la douille supérieur 9 pour empêcher les infiltrations de liquide à travers cette douille. Un joint pourra être prévu entre la douille 9 et le capuchon. Un soufflet extensible non représenté pourra également être prévu par dessus la douille inférieure 8 et la touche 3 pour éviter les infiltrations de liquide par l'owerture 82.

Le boîtier 10 et les différents joints décrits ci-dessus permettent d'obtenir un comparateur avec un indice de protection selon la norme DIN40050 par exemple égal à IP54, c'est-à-dire protégé contre les poussières (pas de dépôt nuisible) et protégé contre les projections de liquide provenant de toutes les directions. D'autres moyens pourront être imaginés dans le cadre de cette invention pour améliorer encore l'étanchéité du volume interne du comparateur. Par exemple, une valve laissant passer l'air mais retenant les vapeurs de liquide et la poussière peut être utilisée pour équilibrer la pression interne et la pression atmosphérique externe. Une capsule de produit dessicant peut également être disposée à l'intérieur du comparateur afin d'absorber les liquides entrés par exemple sous forme de vapeur.

L'homme du métier comprendra que des comparateurs de types, de forme et de dimensions très divers peuvent être réalisés dans le cadre de cette invention, ainsi que d'autres types de dispositifs similaires pour la mesure et la comparaison de longueurs, de profondeurs, d'angles, de diamètres, etc..

## Revendications

1. Comparateur pour la mesure et la comparaison de dimensions linéaires ou angulaires, comprenant:
un bâti métallique (2),
au moins un palier (23, 24) destiné à recevoir une touche de palpage (3) traversant ledit bâti (2),
au moins une douille (8, 9) solidaire du bâti (2),
un système de mesure comprenant une partie mobile (33) entraînée par ladite touche de palpage et une partie fixe solidaire du bâti, **caractérisé par**
un boîtier (10) recouvrant les faces externes (25) dudit bâti (2) et maintenu par ladite au moins une douille (8, 9).

2. Comparateur selon la revendication précédente, dans lequel lesdites faces externes (25) du bâti (2) sont entièrement recouvertes par ledit boîtier (10).

3. Comparateur selon l'une des revendications précédentes, dans lequel un joint (81, 91) est prévu entre ledit boîtier (10) et ladite au moins une douille (8, 9).

4. Comparateur selon l'une des revendications précédentes, muni en outre d'un couvercle (11) fixé audit boîtier (10).

5. Comparateur selon la revendication précédente, un joint (101) étant prévu entre ledit boîtier (10) et ledit couvercle (11).

6. Comparateur selon l'une des revendications 4 ou 5, ledit couvercle (11) portant un affichage (4) et pouvant être pivoté par rapport audit bâti (2).

7. Comparateur selon l'une des revendications précédentes, comprenant une douille inférieure (8) et une douille supérieure (9) toutes deux solidaires du bâti (2), ledit boîtier (10) étant maintenu par les deux douilles (8, 9).

8. Comparateur selon l'une des revendications précédentes, comprenant en outre des vis de fixation dudit boîtier audit bâti.

9. Comparateur selon l'une des revendications précédentes, dans lequel ladite au moins une douille (8, 9) a été fixée audit bâti (2) en la passant dans une ouverture (102, 103) dudit boîtier (10) après montage de ce dernier sur le bâti (2).

10. Comparateur selon l'une des revendications précédentes, dans lequel ledit au moins un palier (23, 24) est usiné ou rapporté directement dans le bâti (2).

11. Comparateur selon la revendication 10, comprenant un palier inférieur (24) et un palier supérieur (23) tous deux usinés ou rapportés directement dans le bâti (2).

12. Comparateur selon la revendication précédente, dans lequel la distance (I) entre le palier inférieur (24) et le palier supérieur (23) est inférieure au diamètre interne dudit boîtier (10).

13. Comparateur selon la revendication précédente, comprenant une douille inférieure (8) et une douille supérieure (9) toutes deux solidaires du bâti (2).

14. Comparateur selon la revendication précédente, dans lequel la distance (I) entre le palier inférieur (24) et le palier supérieur (23) est inférieure à la distance entre ladite douille inférieure (8) et ladite douille supérieure (9).

## Claims

1. Dial indicator for measuring and comparing linear or angular dimensions, comprising:
a metallic casing (2),
at least one bearing (23, 24) intended to accommodate a sensing probe (3) going through said casing (2),
at least one socket (8, 9) integral with the casing (2),
a measuring system comprising a mobile portion (33) driven by said sensor probe and a fixed portion integral with the casing, **characterized by**
a housing (10) covering the outer sides (25) of said casing (2) and held by said at least one socket (8, 9).

2. Dial indicator according to the preceding claim, wherein said outer sides (25) of the casing (2) are entirely covered by said housing (10).

3. Dial indicator according to one of the preceding claims, wherein a gasket (81, 91) is provided between said housing (10) and said at least one socket (8, 9).

4. Dial indicator according to one of the preceding claims, fitted further with a cover (11) fastened to said housing (10).

5. Dial indicator according to the preceding claim, a gasket (101) being provided between said housing (10) and said cover (11).

6. Dial indicator according to one of the claims 4 or 5, said cover (11) bearing a display (4) and able to pivot in relation to said casing (2).

7. Dial indicator according to one of the preceding claims, comprising a lower socket (8) and an upper socket (9), both integral with the casing (2), said housing (10) being held by both sockets (8, 9).

8. Dial indicator according to one of the preceding claims, further comprising fastening screws of said housing onto said casing.

9. Dial indicator according to one of the preceding claims, wherein said at least one socket (8, 9) has been made integral with said casing (2) by passing through an opening (102, 103) of said housing (10) after the latter has been mounted onto the casing (2).

10. Dial indicator according to one of the preceding claims, wherein said at least one bearing (23, 24) is machined or fastened directly into the casing (2).

11. Dial indicator according to claim 10, comprising a lower bearing (24) and an upper bearing (23), both being worked or fastened directly into the casing (2).

12. Dial indicator according to the preceding claim, wherein the distance (I) between the lower bearing (24) and the upper bearing (23) is less than the inner diameter of said housing (10).

13. Dial indicator according to the preceding claim, comprising a lower socket (8) and an upper socket (9), both integral with the casing (2).

14. Dial indicator according to the preceding claim, wherein the distance (I) between the lower bearing (24) and the upper bearing (23) is less than the distance between said lower socket (8) and said upper socket (9).

## Patentansprüche

1. Messuhr für das Messen und das Vergleichen von Länge- oder Winkeldimensionen, beinhaltend:
einen metallischen Rahmen (2),
mindestens ein Lager (23, 24) dazu bestimmt, eine den besagten Rahmen (2) durchquerende Fühlerprobe (3) zu empfangen,
mindestens eine mit dem Rahmen (2) festverbundene Hülse (8, 9),
ein Messsystem beinhaltend einen durch die besagte Fühlerprobe angetriebenen beweglichen Teil (33) and einen fest mit dem-Rahmen (2) verbundenen unbeweglichen Teil, **gekennzeichnet durch**:
ein Gehäuse (10), welches die Aussenseiten (25) des besagten Rahmens (2) abdeckt, und das **durch** die besagte wenigstens eine Hülse (8, 9) gehalten wird.

2. Messuhr gemäss dem vorhergehenden Anspruch, **dadurch gekennzeichnet, dass** die besagten Aussenseiten (25) des Rahmens (2) ganz von besagtem Gehäuse (10) abgedeckt sind.

3. Messuhr gemäss einem der vorhergehenden Ansprüche, in welcher eine Dichtung (81, 91) zwischen besagtem Gehäuse (10) und besagter mindestens einer Hülse (8, 9) vorgesehen ist.

4. Messuhr gemäss einem der vorhergehenden Ansprüche, ausserdem mit einem am Gehäuse (10) festgemachten Deckel (11) ausgestattet.

5. Messuhr gemäss dem vorhergehenden Anspruch, wobei eine Dichtung (101) zwischen besagtem Gehäuse (10) und besagtem Deckel (11) vorgesehen ist.

6. Messuhr gemäss einem der Ansprüche 4 oder 5, wobei besagter Deckel (11) eine Anzeige (4) enthält und in Bezug auf besagten Rahmen (2) gedreht werden kann.

7. Messuhr gemäss einem der vorhergehenden Ansprüche, beinhaltend eine untere Hülse (8) und eine obere Hülse (9), beide mit dem Rahmen (2) fest verbunden, wobei besagtes Gehäuse (10) durch die beiden Hülsen (8, 9) gehalten wird.

8. Messuhr gemäss einem der vorhergehenden Ansprüche, ausserdem beinhaltend Befestigungsschrauben von besagtem Gehäuse auf besagten Rahmen.

9. Messuhr gemäss einem der vorhergehenden Ansprüche, in welcher die besagte wenigstens eine Hülse (8, 9) an besagten Rahmen (2) festgemacht wurde, indem sie durch eine Öffnung (102, 103) in besagtem Gehäuse (10) durchdringt, nachdem Letzteres auf dem Rahmen (2) montiert worden ist.

10. Messuhr gemäss einem der vorhergehenden Ansprüche, in welcher das besagte wenigstens ein Lager (23, 24) direkt in den Rahmen (2) eingearbeitet oder aufgesetzt ist.

11. Messuhr gemäss dem Anspruch 10, beinhaltend ein unteres Lager (24) und ein oberes Lager (23), wobei beide direkt in den Rahmen (2) eingearbeitet oder aufgesetzt sind.

12. Messuhr gemäss dem vorhergehenden Anspruch, in welcher die Distanz (I) zwischen dem unteren Lager (24) und dem oberen Lager (23) kleiner ist als der innere Durchmesser des besagten Gehäuses (10).

13. Messuhr gemäss dem vorhergehenden Anspruch, beinhaltend eine untere Hülse (8) und einen obere Hülse (9), beide fest mit dem Rahmen (2) verbunden.

14. Messuhr gemäss dem vorhergehenden Anspruch, in welcher die Distanz (I) zwischen dem unteren Lager (24) und dem oberen Lager (23) kleiner ist als die Distanz zwischen besagter unterer Hülse (8) und besagter oberer Hülse (9).
